# EUROPEAN PATENT APPLICATION

(11) **EP 1 605 081 A2**
(43) Date of publication of application: **14.12.2005**
(21) Application number: 05010206.0
(22) Date of filing: 11.05.2005
(51) Int. Cl.: D03D 15/00

(54) **Fabric with active illumination and reflection characteristics**

(30) Priority: 08.06.2004 CN 200410046390
(71) Applicant: Baycom Opto-Electronics Technology Co., Ltd., Hsinchu (TW)
(72) Inventor: Huang, Jyh-Perng, Shanhua Town Tainan County 741 (TW); Peng, Chi-Tsung, Hsinchu City 300 (TW)
(74) Representative: Ganahl, Bernhard

(57) **Abstract**

A woven fabric with active illumination and reflection characteristics is described. Light guiding fibers (104) are used as the weft, bright threads (102) are used as the warp, and the warp and the weft are interwoven, or partial lengths of the light guiding fibers (104) are not interwoven with the bright threads (102). The light-emitting woven fabric has light guiding fibers and bright threads as the weft, and bright threads as the warp, the weft and the warp being interwoven, or partial lengths of the light guiding fibers not being interwoven with the bright threads.

## Description

### BACKGROUND

### Field of invention

The present invention relates to a type of fabric, particularly to a type of illuminative fabric consisting of bright thread and light guiding fibers.

### Description of Related Art

There are two lighting systems for nighttime illumination, decorative or warning systems. One is a passive, light-reflective device reflecting foreign light source for warning purposes without consuming power. Generally, the passive light-reflecting device consists of plastic light-reflective strips or light-reflective plates. These, however are made of hard materials, and do not provide light when no light source is available from the ambient environment.

Another system is an active light-emitting device made of fluorescent light or lamp bulbs, in most cases. Such device has a high luminosity and is free from environmental restrictions, but is not suitable for use on garments or decorations for warning or decorative purposes, because it has sophisticated construction and is bulky and expensive.

The conventional side-light fibers are made by partially destroying the coating of carbon fluoride molecules on the walls of regular plastic optical fibers. When a light source is provided at the end of a fiber, the light travels along the axis of the light guiding fiber. Since the reflective materials on the walls of the light guiding fibers are partially destroyed, light is emitted from the destroyed parts, thereby emitting light rays from the sides of the light guiding fibers. But the side-light fibers do not have sufficient flexibility and consistent lighting distribution, and do not allow sufficient curvature. Therefore, there is a need for a type of fabric with active illumination, which is lightweight, flexible and capable of providing consistent lighting effects, and can be used on clothing, decorations, bulletin boards and other devices.

### SUMMARY

It is therefore an objective of the present invention to provide a type of fabric with active illumination and reflection characteristics. The fabric of the present invention is capable of providing active illumination at a location where sufficient lighting is lacking, and providing concentrated lighting by light reflection characteristics.

It is another an objective of the present invention to provide a lightweight, flexible and portable fabric with active illumination and passive reflection characteristics for the production of clothing, decorative articles, bulletin boards, and warning devices.

In accordance with the foregoing and other objectives of the present invention, a fabric is provided by interworking warp bright threads and weft light guiding fibers, the warp and the weft being interwoven in lengthwise and crosswise directions, or partial lengths of the weft light guiding fibers not being interwoven with the warp threads

The type of fabric provided to serve the purposes of the invention uses bright threads as the warp, and simultaneously the bright threads and light guiding fibers as the weft. Proportions of the bright threads and the light guiding fibers are chosen so the bright threads are intermittently arranged between the light guiding fibers. Then, the warp of bright threads and light guiding fibers is interwoven with the weft of bright threads, or partial lengths of the weft light guiding fibers not interwoven with the bright threads of the warp.

Optionally, the light guiding fibers used in the present invention of fabric are light guiding fibers with light escaping from their sidewalls. Additionally, the light guiding fibers of the weft are optionally connected with a light source, such as a Light-emitting Diode LED. One to seven pieces of light guiding fibers are optionally bundled as one and connected with the light source, or preferably, three to five pieces are bundled as one and connected with the light source.

The bright threads used in the present invention of fabric are optionally bright threads with a round, square or triangular cross section. The luminosity of the bright threads ranges from grade 1 to grade 10, and preferably between grade 5 and grade 10. The ratio of the light guiding fibers to the bright threads of the weft (light guiding fibers:bright threads) ranges from approximately 20:0 to 1:7, and preferably between 20:0 and 1:5, where 20:0 indicates that the weft consists fully of light guiding fibers.

The fabric with active illumination and reflection characteristics of the present invention uses weft light guiding fibers connected with light sources to provide active lighting, as well as light reflecting bright threads, the bright threads themselves and the plane composed of interwoven bright threads serving to reflect a foreign light source, and meanwhile reflecting the light projected from the light guiding fibers, causing the light to concentrate on a same side to achieve the purpose of concentrated and consistent lighting distribution. On the other hand, the present invention uses bright threads inserted between the light guiding fibers in the weft for lightness and flexibility.

### BRIEF DESCRIPTION OF THE DRAWINGS

The other objects and features of the present invention can be more fully understood by referring to the following description of preferred embodiments and accompanying drawings, in which
FIG. 1 shows a woven fabric using bright threads as warp and light guiding fibers as weft, the warp and the weft being interwoven, according to the present invention;
FIG. 1 A shows a schematic, cross-sectional view of the woven fabric, according to the present invention;
FIG. 2 shows a woven fabric using bright threads as warp, with light guiding fibers and bright threads intermittently arranged and interwoven as weft, according to the present invention;
FIG. 2A shows a schematic, cross-sectional view of the woven fabric, illustrating the shape of the cross section of weft threads and how the warp and the weft are interwoven, according to the present invention;
FIG. 2B shows a schematic, cross-sectional view of the woven fabric, illustrating the shape of the cross section of the weft threads and how the warp and the weft are interwoven, according to the present invention;
FIG. 3 shows a woven fabric, using bright threads as the warp, the light guiding fibers and the bright threads being intermittently arranged and interwoven, according to the present invention;
FIG. 3A shows a schematic, cross-sectional view of the woven fabric, illustrating the shape of the cross section of weft threads and how the warp and the weft are interwoven, according to the present invention; and
FIG. 3B shows a schematic, cross-sectional view of the woven fabric, illustrating the shape of the cross section of the weft threads and how the warp and the weft are interwoven, according to the present invention.

### DESCRIPTION OF THE PREFERRED EMBODIMENTS

A type of fabric with active illumination and the reflection characteristics of the present invention is disclosed in the preferred embodiments. Using several different types of bright threads with different luminosities, and different proportions of light guiding fibers and bright threads in the weft, the present invention has disclosed several variations in the preferred embodiments. Anyone skilled in the art can gain understanding from the description of the preferred embodiments and practice the invention without departing from the spirit and intent of the present invention.

The luminosity of the bright threads used in the preferred embodiments has been measured according to the CNS-7773 luminosity measuring method, the luminosity being graded in ten degrees according to the thread's light-reflective capacity. Grade one to three indicates bright threads that do not reflect light, and are referred to as frosted threads. Grades three to ten indicates bright threads that do have light reflective effects. In the preferred embodiments, bright threads having a luminosity of grade five or higher are used as materials.

### The first preferred embodiment

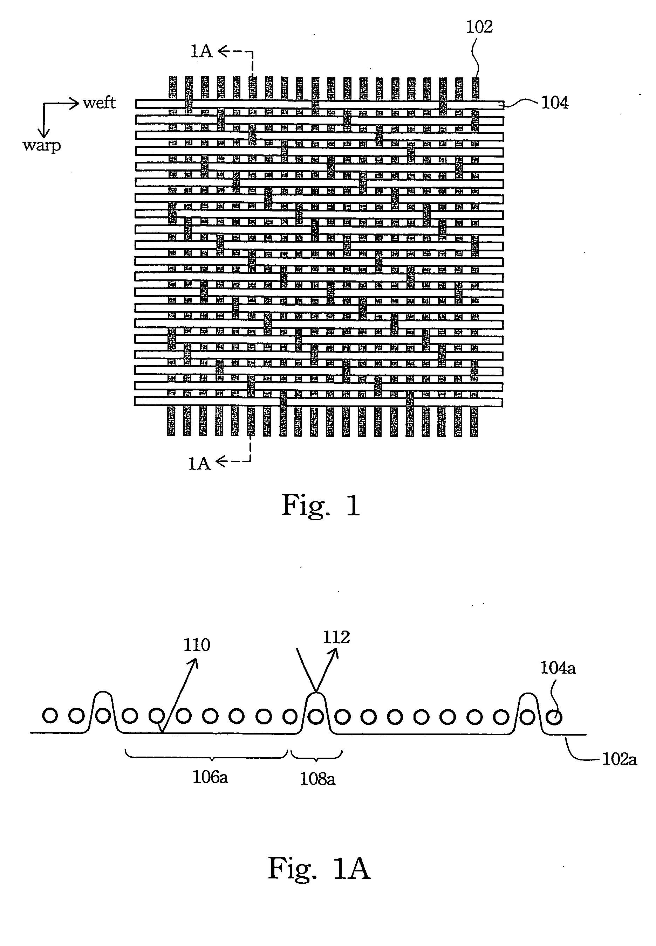

As shown in the preferred embodiment in FIG.1, the warp 102 consists entirely of round bright threads having a luminosity of grade five, while the weft 104 consists entirely of light guiding fibers. Referring to the weaving illustrated in FIG. 1, the light guiding fibers and round bright threads are woven to obtain the first woven fabric.

FIG. 1A shows a longitudinal schematic, cross-sectional view of the first woven fabric. The circle 104a is a schematic, cross-sectional view of the light guiding fiber, and the thread 102a is a round illuminating thread having a luminosity of grade 5. The part where the light guiding fibers are not interwoven with the round bright threads is zone 106a; the interwoven part is zone 108a. When one to seven pieces, or preferably three to five pieces, of light guiding fibers are connected to the active light-emitting source, such as a LED, it becomes the first woven fabric with active illumination.

When the first woven fabric emits light actively, the round bright threads in zone 106a will reflect the light-emitting from the light guiding fiber, thereby making the avtive light source 110 consistent and concentrated on one side. The round bright threads in zone 108a will reflect the foreign light source 112.

### The second preferred embodiment

The first preferred embodiment is modified by using only triangular bright threads having a luminosity of grade 5 for the warp 102 and only light guiding fibers for the weft 104. Referring to the weaving illustrated in FIG. 1, the light guiding fibers and the triangular bright threads are woven to obtain the second woven fabric that has active illumination and reflection characteristics. This preferred embodiment, as well as the following preferred embodiments, adopts the same method as described above for the first preferred embodiment. Therefore, it requires no elaboration.

### The third preferred embodiment

The first preferred embodiment is modified by using only round bright threads having a luminosity of grade 7 for the warp 102 and only light guiding fibers for the weft 104. Referring to the weaving illustrated in FIG. 1, the light guiding fibers and the round bright threads are woven to obtain the third woven fabric that has active illumination and reflection characteristics.

### The fourth preferred embodiment

The first preferred embodiment is modified by using only triangular bright threads having a luminosity of grade 7 for the warp 102 and only light guiding fibers for the weft 104. Referring to the weaving illustrated in FIG. 1, the light guiding fibers and the triangular bright threads are woven to obtain the fourth woven fabric that has active illumination and reflection characteristics.

### The fifth preferred embodiment

The first preferred embodiment is modified by using only round bright threads having a luminosity of grade 10 for the warp 102 and only light guiding fibers for the weft 104. Referring to the weaving illustrated in FIG. 1, the light guiding fibers and the round bright threads are woven to obtain the fifth woven fabric that has active illumination and reflection characteristics.

### The sixth preferred embodiment

The first preferred embodiment is modified by using only triangular bright threads having a luminosity of grade 10 for the warp 102 and only light guiding fibers for the weft 104. Referring to the weaving illustrated in FIG. 1, the light guiding fibers and the triangular bright threads are woven to obtain the sixth woven fabric that has active illumination and reflection characteristics.

### The seventh preferred embodiment

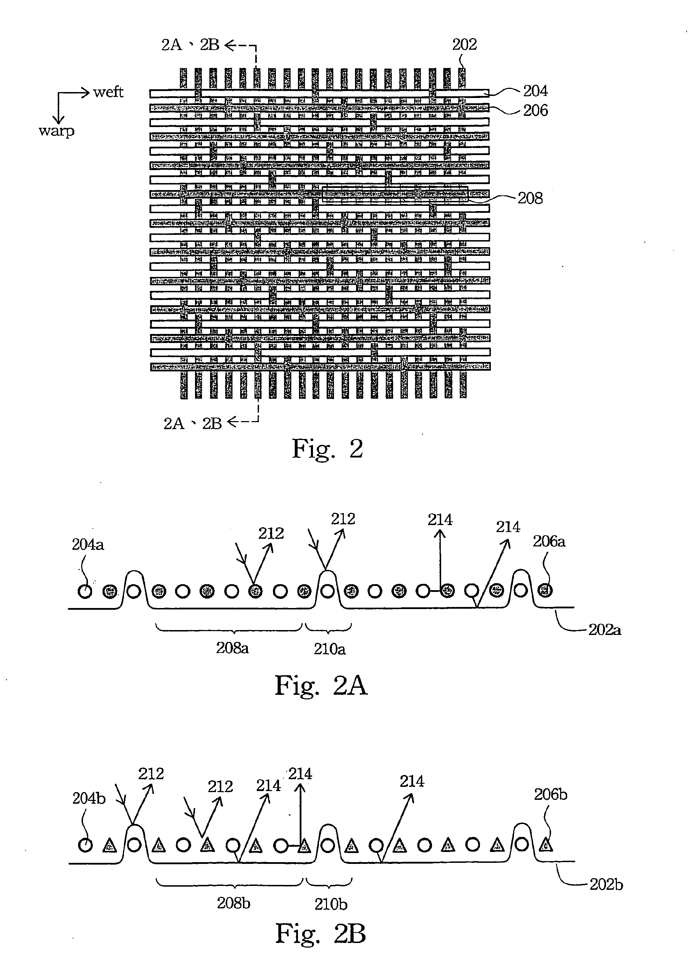

Modification of the first preferred embodiment results in the seventh preferred embodiment. As shown in FIG. 2, only round bright threads having a luminosity of grade 5 are used for the warp 202, while light guiding fibers and round bright threads of grade 5 are respectively used for the weft 204 and 206. In a ratio of 1:1, each round illuminating thread is inserted between two light guiding fibers. Then, referring to the weaving illustrated in FIG. 2, the light guiding fibers and the round bright threads are woven to obtain the seventh woven fabric.

FIG. 2A shows a schematic, longitudinal, cross-sectional view of the seventh fabric. The hollow circle 204a is a cross section of the light guiding fiber. The solid circle 206a is a cross section of the round bright thread. The thread 202a is a round bright thread. The part where the light guiding fibers are not interwoven with the round bright threads is zone 208a. The interwoven part is zone 210a. When terminals of one to seven pieces, or preferably three to five pieces of light guiding fibers are connected to an active illuminating light source, such as a Light-emitting Diode (LED), it becomes the seventh fabric with active illumination.

When the seventh fabric emits light actively, the round bright threads in zone 208a will reflect the light emitted from the light guiding fiber, making the active light source 214 have consistent lighting distribution and concentrated lighting effect on the same side. Meanwhile, the round bright threads are interwoven to form the plane 208 shown in FIG. 2, and the zone 210a in FIG. 2A will reflect the foreign light source 212.

### The eighth preferred embodiment

The eighth preferred embodiment comes from modifying the seventh preferred embodiment. As shown in FIG. 2, only triangular bright threads having a luminosity of grade 5 are used for the warp 202, light guiding fibers are used for the weft 204, and triangular bright threads of grade 5 are used for the weft 206. In a ratio of 1:1, a triangular bright thread is inserted between every two light guiding fibers. Then, referring to the weaving illustrated in FIG. 2, the light guiding fibers and the round bright threads are woven to obtain the eighth woven fabric.

FIG. 2B shows a schematic, longitudinal, cross-sectional view of the eighth woven fabric. The hollow circle 204b is a cross section of the light guiding fiber, the solid triangle 206b is a cross section of the triangular bright thread, and the thread 202b is a triangular bright thread. The part where the light guiding fibers are interwoven with the triangular bright threads is zone 208b. The interwoven part is zone 210b. When terminals of one to seven pieces, or preferably three to five pieces of light guiding fibers are connected to an active illumination light source, such as a Light-emitting Diode (LED), it will become the eighth woven fabric with active illumination.

When the eighth fabric emits light actively, the round bright threads in zone 208b will reflect the light-emitting from the light guiding fibers, making consistent distribution to the active light source 214 and concentrated lighting effect on the same side. Meanwhile, the round bright threads are interwoven to form the plane 208 shown in FIG. 2, and the zone 210a in FIG. 2A will reflect the foreign light source 212.

### The ninth preferred embodiment

In this embodiment, the seventh preferred embodiment is modified by using only round bright threads having a luminosity of grade 7 for the warp 202, and light guiding fibers and round bright threads of grade 7, respectively, for the weft 204 and 206, as shown in FIG. 2. In a ratio of 1:1, each round bright thread is inserted between two light guiding fibers. Then, referring to the weaving illustrated in FIG. 2, the light guiding fibers and the round bright threads are woven to obtain the ninth woven fabric. The ninth preferred embodiment, as well as the following preferred embodiments, adopts the same method as described above for the seventh and the eighth embodiments, so it requires no further elaboration.

### The tenth preferred embodiment

This embodiment is arrived at by modifying the eighth preferred embodiment, using only triangular bright threads having a luminosity of grade 7 for the warp 202, and light guiding fibers and triangular bright threads of grade 7, respectively, for the weft 204 and 206, as shown in FIG. 2. In a ratio of 1:1, each triangular bright thread is inserted between two light guiding fibers. Then, referring to the weaving illustrated in FIG. 2, the light guiding fibers and the round bright threads are woven to obtain the tenth woven fabric.

### The eleventh preferred embodiment

In this embodiment, the seventh preferred embodiment is modified by using only round bright threads having a luminosity of grade 10 are used for the warp 202, and the light guiding fibers and round bright threads of grade 10 respectively for the weft 204 and 206, as shown in FIG. 2. In a ratio of 1:1, each round bright thread is inserted between two light guiding fibers. Then, referring to the weaving illustrated in FIG. 2, the light guiding fibers and the round bright threads are woven to obtain the eleventh woven fabric.

### The twelfth preferred embodiment

In this embodiment, the eighth preferred embodiment is modified by using only triangular bright threads having a luminosity of grade 10 for the warp 202, and light guiding fibers and triangular bright threads of grade 10, respectively, for the weft 204 and 206, as shown in FIG. 2. In a ratio of 1:1, each triangular bright thread is inserted between two light guiding fibers. Then, referring to the weaving illustrated in FIG. 2, the light guiding fibers and the round bright threads are woven to obtain the twelfth woven fabric.

### The thirteenth preferred embodiment

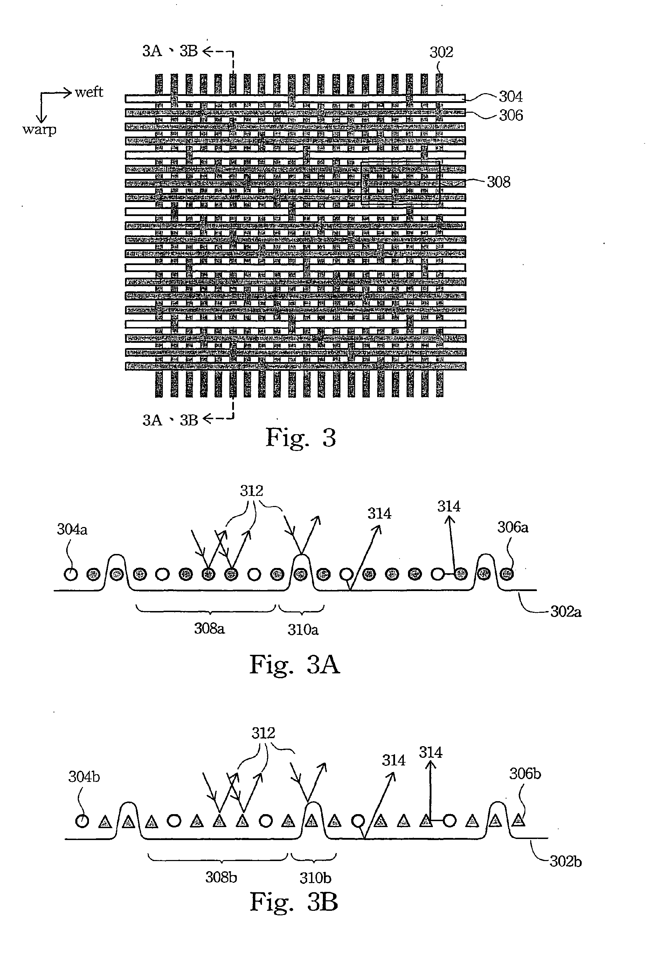

The thirteenth embodiment is obtained by modifying the seventh preferred embodiment. As shown in FIG. 3, only round bright threads having a luminosity of grade 5 are used for the warp 302, and light guiding fibers and round bright threads of grade 5 are used, respectively, for the weft 304 and 306. In a ratio of 1:3, each three round bright threads are inserted between two light guiding fibers. Then, referring to the weaving illustrated in FIG. 3, the light guiding fibers and the round bright threads are woven to obtain the thirteenth woven fabric.

FIG. 3A is a schematic, longitudinal, cross-sectional view of the thirteenth woven fabric. The hollow circle 304a is a cross section of the light guiding fiber, the solid round 306a is a cross section of the round bright thread, and the thread 302a is a round bright thread. The part where the light guiding fibers are not interwoven with the round bright threads is zone 308a. The interwoven part is zone 310a. When the terminals of one to seven, or preferably three to five pieces of light guiding fibers are connected to an active light-emitting source, such as a LED, it becomes the e thirteenth woven fabric with active illumination.

When the thirteenth woven fabric emits light actively, the round bright threads in zone 308a will reflect the light-emitting from the light guiding fiber, making consistent lighting distribution of the active light source 314, and a concentrated lighting effect on the same side. Meanwhile, the round bright threads are interwoven to form the plane 308 shown in FIG. 3, and zone 310a in FIG. 2A will reflect the foreign light source 312.

### The fourteenth preferred embodiment

This embodiment is obtained by modifying the seventh preferred embodiment. As shown in FIG. 3, only triangular bright threads having a luminosity of grade 5 are used for the warp 302, light guiding fibers are used for the weft 304, and triangular bright threads of grade 5 are used for the weft 306. In a ratio of 1:3, each three triangular bright threads are inserted between two light guiding fibers. Then, referring to the weaving illustrated in FIG. 3, the light guiding fibers and the round bright threads are woven to obtain the fourteenth woven fabric.

FIG. 3B illustrates a schematic, longitudinal, cross-sectional view of the fourteenth woven fabric. The hollow circle 304b is a cross section of the light guiding fiber, the solid triangle 306b is a cross section of the triangular bright thread, and the thread 302b is the triangular bright thread. The part where the light guiding fibers are not interwoven with the triangular bright threads is zone 308b, and the interwoven part is zone 310b. When the terminals of one to seven, or preferably three to five pieces of light guiding fibers are connected to the active bright source, such as a LED, it becomes the fourteenth preferred embodiment with active illumination.

When the fourteenth woven fabric emits light actively, the round bright threads in zone 308b will reflect the light-emitting from the light guiding fiber, making consistent lighting distribution of the light source 314, and a concentrated lighting effect on the same side. Meanwhile, the round bright threads are interwoven to form the plane 308 in FIG. 3, and the zone 310a in FIG. 3A will reflect the foreign light source 312.

### The fifteenth preferred embodiment

This is a modification of the thirteenth preferred embodiment, using only round bright threads having a luminosity of grade 7 for the warp 302, and light guiding fibers and round bright threads of grade 7, respectively, for the weft 304 and 306, as shown in FIG. 3. In a ratio of 1:3, each three round bright threads are inserted between two light guiding fibers. Then, referring to the weaving illustrated in FIG. 3, the light guiding fibers and round bright threads are woven to obtain the fifteenth woven fabric. The method adopted in the fifteenth embodiment, as well as the following embodiment, is the same as the method described above for the thirteenth and the fourteenth embodiment, so it requires no further elaboration.

### The sixteenth preferred embodiment

This is a modification of the fourteenth preferred embodiment, using only triangular bright threads having a luminosity of grade 7 for the warp 302, and light guiding fibers and triangular bright threads of grade 7, respectively, for the weft 304 and 306. In a ratio of 1:3, each three triangular bright threads are inserted between two light guiding fibers. Then, referring to the weaving illustrated in FIG. 3, the light guiding fibers and the round bright threads are woven to obtain the sixteenth woven fabric.

### The seventeenth preferred embodiment

This is a modification of the thirteenth embodiment, using only round bright threads having a luminosity of grade 10 for the warp 302, and light guiding fibers and round bright threads of grade 10, respectively, for the weft 304 and 306, as shown in Fig. 3. In a ratio of 1:3, each three round bright threads are inserted between two light guiding fibers. Then, referring to the weaving illustrated in FIG. 3, the light guiding fibers and the round bright threads are woven to obtain the seventeenth woven fabric.

### The eighteenth preferred embodiment

This is a modification of the fourteenth preferred embodiment, using only triangular bright threads having a luminosity of grade 10 for the warp 302, and light guiding fibers and triangular bright threads of grade 10, respectively, for the weft 304 and 306, as shown in FIG. 3. In a ratio of 1:3, each three triangular bright threads are inserted between two light guiding fibers. Then, referring to the weaving illustrated in FIG. 3, the light guiding fibers and the round bright threads are woven to obtain the eighteenth woven fabric.

A luminosity test is conducted according to the CNS 5064 luminosity measuring method to measure respective luminosities for the first to the eighteenth woven fabrics as described in the foregoing first to eighteenth preferred embodiments. The relative luminosity of respective woven fabrics is calculated on the base of 100% for the sixth preferred embodiment that has the highest luminosity among the eighteen preferred embodiments. Table 1 shows the results of the test, along with the types of bright threads used in the fabrics, and the proportions of the light guiding fibers to the bright threads.

**Table 1,**

| **Relative Luminosity of Different Fabrics** | | | | | | |
|---|---|---|---|---|---|---|
| Warp/weft proportion Light guiding fibers: Bright threads | **Relative luminosity** | | | | | |
| | Round Luminosity 5 | Triangular Luminosity 5 | Round Luminosity 7 | Triangular Luminosity 7 | Round Luminosity 10 | Triangular Luminosity 10 |
| 20 : 0 (All light guiding fibers) | 69.0% 1^{st} Fabric | 72.4% 2^{nd} Fabric | 82.8% 3^{rd} Fabric | 86.2% 4^{th} Fabric | 96.6% 5^{th} Fabric | 100% 6^{th} Fabric |
| 1:1 | 34.5% 7^{th} Fabric | 37.9% 8^{th} Fabric | 41.4% 9^{th} Fabric | 43.1 % 10^{th} Fabric | 44.8% 11^{th} Fabric | 44.8% 12^{th} Fabric |
| 1 : 3 | 15.5% 13^{th} Fabric | 17.6% 14^{th} Fabric | 20.7% 15^{th} Fabric | 21.4% 16^{th} Fabric | 22.4% 17^{th} Fabric | 24.1% 18^{th} Fabric |

Table 1 shows the following. First, high-luminosity bright threads as the materials are used for the woven fabric, providing higher luminosity to the woven fabric than the use of low-luminosity bright threads. For example, when only light guiding fibers are used for the weft, a woven fabric having a luminosity of grade 7 for the warp has a higher luminosity than a woven fabric having a luminosity of grade 5, and a third-grade woven fabric has a higher luminosity than a first-grade woven fabric. There is no need of proof to draw to the conclusion. When the threads have no light-reflecting effect (frosted threads) are used as the material for the woven fabric, the bright threads used as materials for the present invention will significantly increase the luminosity of the fabric.

Second, the cross-sectional shape of the bright threads has an effect. As shown in Table 1, given the same rate of light guiding fibers and bright threads in the weft, a woven fabric using triangular bright threads has a higher luminosity than a fabric using round threads. Because triangular bright threads have planes that are more efficient in reflecting light, given the same proportion of use of light guiding fibers for the weft, triangular bright threads are capable of a higher luminosity than round bright threads. Meanwhile, bright threads having a square cross section are also capable of increasing the light-reflecting efficiency of woven fabrics, thereby increasing the luminosity of the woven fabrics.

Thirdth, the proportions of light guiding fibers and bright threads used for the weft are also important. When a higher percentage of light guiding fibers is used, the woven fabric will have a higher luminosity. Relatively, when the weft uses a higher percentage of bright threads, the woven fabric will have a lighter and softer texture, while the plane interwoven of bright threads (such as the plane 308 in FIG. 3) and the bright threads themselves will provide an active and consistent light source, and will reflect the light coming from a foreign source. The rate of light guiding fibers and bright threads used for the weft may range from 20:0 to about 1:7, or preferably between 20:0 and about 1:5.

Therefore, the present invention provides a woven fabric using light guiding fibers as materials, with a light-emitting source connected to the terminals of the light guiding fibers, providing active illumination to the woven fabric of the present invention. Another feature of the present invention is the use of bright threads in the fabric, using the plane composed of interwoven bright threads to reflect the light coming from a foreign source, and meanwhile reflecting the light emitted from the light guiding fibers, so the light is concentrated on the same side and has a consistent light distribution. On the other hand, bright threads are inserted between the light guiding fibers in the weft, allow the present invention of an illuminated fabric to be lightweight and flexible.

Moreover, the percentage of light guiding fibers and the types of bright threads can be adjusted to suit the needs of applications of the present invention. For instance, when the invention of illuminating fabric is used on an warning signal, it is advisable to use only light guiding fibers for the weft, and triangular or square bright threads having a luminosity of grade ten, in order to produce a woven fabric having the highest luminosity for warning purposes. Also, when the present invention is used on clothing or decorative items, it is advisable to insert a specified number of bright threads between the light guiding fibers for the weft, to increase the flexibility of the woven fabric, and provide better comfort and lighting effects.

The specific percentages and figures cited in the foregoing embodiments, including luminosity grade 5 and rate 1:7, and directional indications such as "upper part" and "lower part", are used merely for the purpose of representation, which shall not be used to restrict the scope of the present invention. The foregoing demonstration or description of the preferred embodiments has been provided for reference only. It is to be understood that all modifications and equivalent variations in details or configurations made by anyone skilled in the art according to the principles disclosed above shall be included in the spirit and intent of the present invention.

## Claims

1. A woven fabric with active illumination and reflection characteristics, comprising:
a plurality of warp bright threads; and
a plurality of weft light guiding fibers, wherein at least partial lengths of the light guiding fibers are interwoven with the bright threads, the bright threads being capable of reflecting light from the light guiding fibers and a foreign light source.

2. The woven fabric of claim 1 further comprises a plurality of bright threads as the weft.

3. The woven fabric of claim 2, wherein a proportion of the light guiding fibers to the bright threads in the weft is approximately 20: 0 to 1:7.

4. The woven fabric of claim 2, wherein a proportion of the light guiding fibers to the bright threads in the weft is preferably approximately 20: 0 to 1:5.

5. The woven fabric of claim 1, wherein, the light guiding fibers include at least one side-light fiber.

6. The woven fabric of claim 1, further comprises at least a light-emitting source connected to the terminals of the light guiding fibers, the light-emitting source including at least one light-emitting diode (LED).

7. The woven fabric of claim 1, wherein the bright threads have a circular, rectangular, or triangular cross section.

8. The woven fabric of claim 7, wherein the bright threads have a luminosity ranging between about grade 1 and grade 10.

9. The woven fabric of claim 1, wherein the woven fabric has a density ranging from approximately 50 to 210 threads per square inch.

10. A woven fabric with active illumination and reflection characteristics, comprising:
a plurality of warp bright threads;
a plurality of weft bright threads; and
a plurality of weft light guiding fibers, wherein at least one weft thread is inserted between the light guiding fibers, and at least partial lengths of the light guiding fibers are interwoven with the bright threads;
wherein the bright threads reflect light from the light guiding fibers and a foreign light source.

11. The woven fabric of claim 10, wherein a proportion of the light guiding fibers to the bright threads in the weft is approximately 20:0 to 1:7.

12. The woven fabric of claim 10, wherein a proportion of the light guiding fibers to the bright threads in the weft is preferably approximately 20:0 to 1:5.

13. The woven fabric of claim 10, wherein the light guiding fibers include at least one side-light fiber.

14. The woven fabric of claim 10, further comprising at least a light-emitting source connected to the terminals of the light guiding fibers , the light-emitting source including at least one light-emitting diode (LED).

15. The woven fabric of claim 10, wherein the bright threads have a circular, rectangular, or triangular cross section.

16. The woven fabric of claim 15, wherein the bright threads have a luminosity ranging from approximately grade 1 to grade 10.

17. The woven fabric of claim 10, wherein the woven fabric has a density ranging from about 50 to 210 threads per square inch.
